# EUROPEAN PATENT APPLICATION

(11) **EP 4 679 306 A1**
(43) Date of publication of application: **14.01.2026**
(21) Application number: 24767460.9
(22) Date of filing: 08.03.2024
(51) Int. Cl.: G06F 21/62, G06F 21/53, G06F 21/60, H04L 9/08, H04L 9/00

(54) **METHOD AND SYSTEM FOR PROCESSING PERSONAL INFORMATION BY USING SMART CONTRACT-BASED TRUSTED EXECUTION ENVIRONMENT**

(30) Priority: 09.03.2023 KR 20230031122
(71) Applicant: AvChain Inc., Seoul 03080 (KR)
(72) Inventor: KIM, Hyeong Joon, Seoul 06113 (KR)
(74) Representative: AWA Sweden AB
(86) International application number: PCT/KR2024/003063
(87) International publication number: WO 2024/186173

(57) **Abstract**

A method for processing personal information using a smart contract-based trusted execution environment comprises the steps of: generating a trusted execution environment including a data processing code and a second encryption key in a data processing platform server in response to a data processing request according to a smart contract on a blockchain; acquiring first data and a first encryption key from a data generation device and an encryption key supply device; decrypting the first data using the first encryption key; generating a data processing result by processing the decrypted data according to the data processing code; providing the data processing result to the data processing request device; and destroying the trusted execution environment according to the smart contract.

## Description

### TECHNICAL FIELD

The present invention relates to a method and system for processing personal information using a smart contract-based trusted execution environment.

### BACKGROUND ART

Blockchain: Blockchain is a decentralized, distributed system. Decentralization means that there is no single centralized entity to perform functions, but rather many participants working together. Basically, blockchain networks are composed of peer-to-peer (P2P) networks and use a consensus algorithm to generate blocks through a common process. The use of hashing is essential in blockchain, and the combination of hashing with multiple participants performing the same processing on the same data prevents data tampering or forgery.

A smart contract is a set of programming codes that operates on a blockchain, addressing aspects of assets and trust, enabling the automatic execution of a contract. The content of the code written by the developer resides in one block on the blockchain, and users can access the address of the smart contract to execute the corresponding code.

The reason why it is called a smart contract is that, like general transaction details, the code content of the smart contract is also included in block information, making it tamper-proof, and that the program works according to the coded content, making it suitable for performing predefined tasks as in a contract.

Smart contracts written in Ethereum use the Solidity language and run on top of the EVM. A virtual machine for professional execution of Ethereum smart contracts is called an Ethereum virtual machine (EVM), wherein the Ethereum smart contracts are written in languages such as Solidity and Viper and are widely applied and used in the field of the blockchain. Several monitoring web applications exist as a way to provide information about the smart contracts in an Ethereum network, the most representative of which are Etherscan, which is provided by Ethereum itself, Alvio, which provides information in a visual form, and Remix, which is Solidity IDE.

Meanwhile, personal information de-identification is a technology that deletes or replaces part or all of personal information through data deletion, pseudonymization, categorization, data masking, etc., so that specific individuals cannot be identified even when combined with other information. It is used as a measure to minimize concerns about personal information exposure and privacy infringement during the data utilization process, and the de-identification issue have been receiving attention in the context of changes in the information and communication technology (ICT) environment represented by Big Data and the accompanying personal information protection controversies.

When personal information de-identification is performed, the generated data becomes anonymized and can no longer identify individuals, but identified personal information may be needed in specific situations such as tracking crime targets or identifying home intruders.

Therefore, there is a need for a technology that can conceal important data information with privacy infringement concerns while enabling the restoration of personal information under limited conditions in personal information de-identification.

### DISCLOSURE

### TECHNICAL PROBLEM

The technical problem of the present invention is to provide a method and system for processing personal information using a smart contract-based trusted execution environment which protects individual privacy by de-identifying identified personal information with an encryption key and restore personal information with the encryption key under limited conditions.

In addition, the technical problem of the present invention is to provide a method and system for processing personal information using a smart contract-based trusted execution environment which fundamentally blocks access to personal information by preemptively de-identifying identified personal information before a series of data processing processes such as data storage, streaming, and transmission.

In addition, the technical problem of the present invention is to provide a method and system for processing personal information using a smart contract-based trusted execution environment which blocks personal information viewing by data processing entities, prevent external leakage of personal information, and securely protect the privacy of data-providing entities.

### TECHNICAL SOLUTION

A method for processing personal information using a smart contract-based trusted execution environment according to an embodiment of the present invention includes: generating, by a data processing platform server, a trusted execution environment containing a data processing code and a second encryption key in response to a data processing request received from a data processing request device according to a smart contract deployed on a blockchain; acquiring, by the trusted execution environment, first data and a first encryption key respectively from a data generation device and an encryption key supply device; decrypting, by the trusted execution environment, the first data based on the first encryption key; processing, by the trusted execution environment, the decrypted first data according to the data processing code to generate a data processing result; providing, by the trusted execution environment, the data processing result to the data processing request device; and destroying the trusted execution environment according to the smart contract.

According to an embodiment, the method for processing personal information using the smart contract-based trusted execution environment may further include: after said generating the trusted execution environment, generating, by the trusted execution environment, a first transaction requesting the first data and a second transaction requesting the first encryption key to record them on the blockchain.

According to an embodiment, the first encryption key may be an asymmetric key comprised of a pair of a first private key and a first public key generated by the encryption key supply device, and the first public key may be generated based on the first private key, wherein the first encryption key may be updated by the encryption key supply device according to a preset schedule.

According to an embodiment, the first data may be data generated by the data generation device, wherein a data area corresponding to personal information is subject to a de-identification processing based on the first public key, and may include first public key information regarding the first public key used for the de-identification processing.

According to an embodiment, the decrypted first data may have the data area corresponding to the personal information that is identified based on the first private key.

According to an embodiment, the second encryption key may be an asymmetric key comprised of a pair of a second private key and a second public key of the trusted execution environment, and the second public key may be generated based on the second private key and may be an account address of the trusted execution environment on the blockchain.

According to an embodiment, the trusted execution environment may be a virtual execution environment that maintains validity only during the period in which the smart contract is in effect.

According to an embodiment, said destroying the trusted execution environment according to the smart contract may include: executing a destroy command; and deleting the trusted execution environment including the data processing code, the first data, and the decrypted first data.

According to an embodiment, said executing a destroy command may include: executing the destroy command, generating a flag indicating the execution of the destroy command, and then generating a transaction including the flag to record it on the blockchain.

According to an embodiment, said decrypting the first data may include: if the trusted execution environment acquires the first data from multiple data generation devices, identifying a data area corresponding to personal information based on a first private key corresponding to first public key information included in each first data.

According to an embodiment, said generating a trusted execution environment may include: generating a raw trusted execution environment in which arbitrary data processing code and second encryption key are not generated; and generating, based on the raw trusted execution environment, the trusted execution environment containing the data processing code and the second encryption key corresponding to the data processing request.

According to an embodiment, said generating a raw trusted execution environment may include: generating a first hash value of a raw image file serving as the basis for generating the raw trusted execution environment, comparing the first hash value with a second hash value of a raw image file pre-deployed on the blockchain, and ensuring the authenticity of the raw trusted execution environment when the first hash value matches the second hash value.

According to an embodiment, said generating a trusted execution environment containing a data processing code and a second encryption key corresponding to the data processing request may include: generating a first image file of the trusted execution environment, generating a hash value for the first image file, and generating a transaction including the hash value to record it on the blockchain.

According to an embodiment, a computer-readable storage medium storing one or more programs is provided, wherein the one or more programs may be configured to be executed by one or more processors of an electronic device, and the one or more programs may include instructions for performing any one of the embodiments of the method for processing personal information using the smart contract-based trusted execution environment.

A system for processing personal information using a smart contract-based trusted execution environment according to another embodiment of the present invention includes: a data generation device configured to generate first data including a data area in which personal information is de-identified based on a first encryption key; and a data processing platform server configured to create a trusted execution environment containing a data processing code and a second encryption key in response to a data processing request received from a data processing request device according to a smart contract deployed on a blockchain, and acquire from the blockchain a first encryption key encrypted with the second encryption key and the first data, wherein the trusted execution environment is configured to decrypt the encrypted first encryption key based on the second encryption key, decrypt the first data based on the decrypted first encryption key, and process the decrypted first data according to the data processing code to generate a data processing result, and wherein the trusted execution environment returns the data processing result to the data processing request device according to the smart contract.

According to an embodiment, the data generation device may be an image recording device that records images, which is configured to detect persons within recorded image frames, perform de-identification processing on at least a part of persons requiring de-identification, and generate the first data including image frames on which the de-identification processing has been performed.

According to an embodiment, the data generation device may be configured to perform primary de-identification processing on persons requiring de-identification using a third encryption key generated according to a symmetric encryption algorithm, and encrypt the third encryption key based on the first encryption key.

According to an embodiment, the trusted execution environment may be a virtual execution environment that maintains validity only during the period in which the smart contract is in effect, and the trusted execution environment may be destroyed according to the smart contract after providing the data processing result to the data processing request device and, upon destroyed, the trusted execution environment including the data processing code, the first data, and the decrypted first data may be deleted.

According to an embodiment, the decrypted first data may be data in which the data area corresponding to the personal information is identified based on the decrypted first encryption key, and the trusted execution environment may be configured to process the identified personal information according to the data processing code to generate a data processing result.

According to an embodiment, the system for processing personal information using the smart contract-based trusted execution environment may further include an encryption key supply device configured to generate different first encryption keys according to a preset schedule and provides them to the data generation device.

### ADVANTAGEOUS EFFECTS

According to the method and system for processing personal information using the smart contract-based trusted execution environment according to an embodiment of the present invention, even when personal information is de-identified, the personal information may be restored and used so that it can be identified in limited situations, and after deriving data processing results, it is safely deleted to protect individual privacy.

In addition, according to the method and system for processing personal information using the smart contract-based trusted execution environment according to an embodiment of the present invention, access to personal information may be fundamentally blocked at the hardware level by preemptively de-identifying identified personal information before a series of data processing processes such as data storage, streaming, and transmission.

In addition, according to the method and system for processing personal information using the smart contract-based trusted execution environment according to an embodiment of the present invention, when a smart contract is terminated, the trusted execution environment is destroyed and the stored data is also deleted, thereby preventing collected data from leaking to the outside and fundamentally blocking data viewing by the operating entity of the data processing platform server to protect the privacy of the data entities.

In addition, according to the method and system for processing personal information using the smart contract-based trusted execution environment according to an embodiment of the present invention, personal information generated by data generation devices such as cameras, CCTVs, and home cameras is fundamentally encrypted and not disclosed even to data entities, and is used restrictively only under specific analysis conditions, thereby protecting individual privacy.

In addition, according to the method and system for processing personal information using the smart contract-based trusted execution environment according to an embodiment of the present invention, multiple smart contracts may be executed simultaneously using trusted execution environments that operate independently for each smart contract.

In addition, according to the method and system for processing personal information using the smart contract-based trusted execution environment according to an embodiment of the present invention, by recording a flag of the destroy command on the blockchain, it may be ensured that the trusted execution environment provided with data is stably removed and that data is safely deleted without leaking to the outside.

Furthermore, according to the method and system for processing personal information using the smart contract-based trusted execution environment according to an embodiment of the present invention, the data processing request device may obtain desired data processing results without directly collecting or processing data required for data processing, and because data required for data processing is not exposed to the data processing request device, the privacy of the data-providing entities may be safely protected.

### BRIEF DESCRIPTION OF THE DRAWINGS

FIG. 1 is a schematic block diagram of a system for de-identification processing of personal information processing system using a smart contract-based trusted execution environment according to an embodiment of the present invention.
FIGS. 2A to 2C are diagrams for explaining a method for de-identification processing of personal information using a smart contract-based trusted execution environment according to an embodiment of the present invention.
FIG. 3 is a diagram for explaining a method for de-identification processing of personal information in a data generation device according to another embodiment of the present invention.
FIG. 4 is a diagram for explaining a method for identification processing of personal information in a trusted execution environment according to an embodiment of the present invention.
FIG. 5 is a diagram for explaining a smart contract according to an embodiment of the present invention.
FIG. 6 is a flowchart illustrating a method for de-identification processing of personal information using a smart contract-based trusted execution environment according to an embodiment of the present invention.

### BEST MODE

The advantages and features of the present invention, and methods of achieving them will be apparent from the embodiments described in detail below in conjunction with the accompanying drawings. However, the invention is not limited to the embodiments disclosed herein and may be implemented in many different forms, and these embodiments are provided to make the disclosure of the invention complete and to fully inform one of ordinary skill in the art to which the invention belongs of the scope of the present invention, and the invention is defined only by the scope of the claims.

The terminology used herein is intended to describe the embodiments and is not intended to limit the invention. Throughout the present specification, the singular includes the plural unless otherwise specifically indicated. As used in the specification, the words "comprises" and/or "comprising" do not exclude the presence or addition of one or more other components in addition to the recited components. Throughout this specification, the same reference numerals refer to the same components, and "and/or" includes any and all combinations of one or more of the specified components. Although "first", "second", etc. are used to describe various components, these components are not limited by these terms. These terms are used only to distinguish one component from another. Therefore, it is understood that a first component referred to below may be a second component within the technical idea of the present invention.

Unless otherwise defined, all terms used in this specification (including technical and scientific terms) may be used with meanings that may be generally understood by those skilled in the art. In addition, terms defined in commonly used dictionaries should not be interpreted ideally or excessively unless explicitly defined herein.

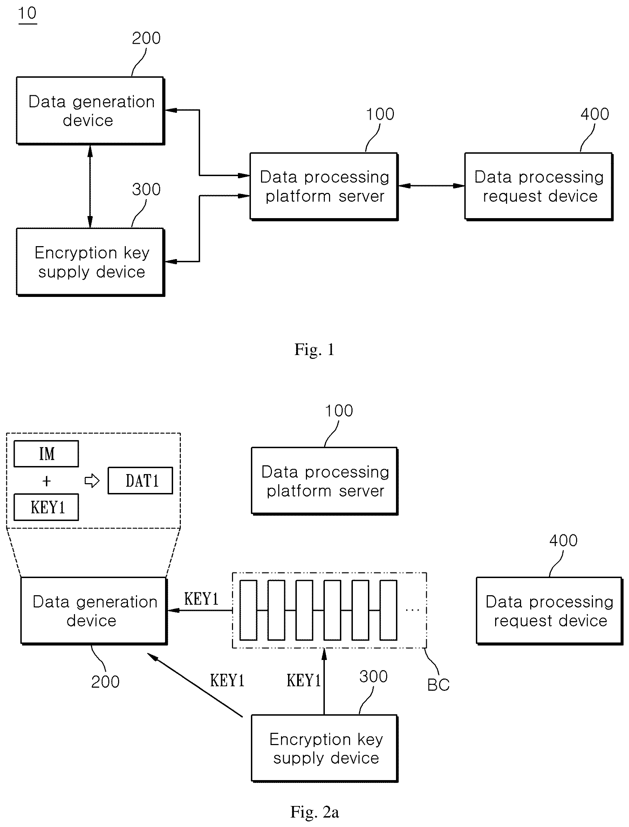

FIG. 1 is a schematic block diagram of a system for de-identification processing of personal information using a smart contract-based trusted execution environment according to an embodiment of the present invention.

Referring to FIG. 1, a system 10 for de-identification processing of personal information using a smart contract-based trusted execution environment includes a data processing platform server 100, a data generation device 200, an encryption key supply device 300, and a data processing request device 400.

The data processing platform server 100 may be a network addressable device capable of hosting online networks, and may provide a data processing platform through which data is shared online with the data generation device 200, the encryption key supply device 300, and the data processing request device 400. The data processing platform server 100 may perform a series of processes such as generating, deploying, executing, and terminating smart contracts on a blockchain through the data processing platform.

The data processing platform server 100 may create a smart contract for data processing and deploy it to a blockchain. The smart contract for data processing is an electronic contract that is automatically executed on the blockchain when preset conditions are satisfied, and the data processing platform server 100 may create a smart contract in which a series of contract contents required for data processing, such as data collection, analysis, and result derivation, are recorded, and deploy it to a blockchain.

A smart contract is recorded in blocks of the blockchain, allowing the smart contract to be executed on the blockchain. For example, the blockchain may be implemented as an Ethereum blockchain, and smart contracts written in Solidity, Viper, etc. may be deployed to the blockchain through an Ethereum Virtual Machine (EVM). In addition, all transactions within the blockchain may be hashed with SHA-256 and the resulting hash values may be stored, and the blocks in a blockchain may store hash values to protect individual privacy and prevent overload

The smart contract deployed by the data processing platform server 100 may be automatically established when a data processing request that conforms to preset protocols is received from the data processing request device 400, and the contract may be terminated when a data processing result is returned in response to the data processing request.

Here, the data processing request relates to a data processing request that may be processed by the data processing platform server 100, and the data processing code required for data processing may be provided from the data processing request device 400 or may be generated by the data processing platform server 100.

For example, when a smart contract is established between the data processing platform server 100 and the data processing request device 400, the data processing platform server 100 may acquire the data processing code provided from the data processing request device 400 and use it for data processing.

For example, when a smart contract is established between the data processing platform server 100 and the data processing request device 400, the data processing platform server 100 may independently determine a processing model required for the data processing request, and then read the determined processing model to use it for data processing.

The data processing platform operated by the data processing platform server 100 generates a Trusted Execution Environment (TEE) for data processing when a smart contract is established. That is, when the data processing platform server 100 receives a data processing request from the data processing request device 400, it generates a trusted execution environment containing a data processing code and an encryption key in response to the data processing request.

Specifically, the data processing platform server 100 may create a raw trusted execution environment that serves as the basis of generating the trusted execution environment. The raw trusted execution environment refers to a virtual execution environment in which arbitrary data processing code and encryption key are not generated.

The raw trusted execution environment is a secure execution environment provided by an independent secure area, and may be created as an image file for implementing a virtual execution environment. However, it is not limited thereto, and the raw trusted execution environment may be implemented as either a hardware-based solution or a hardware/software-based solution.

According to an embodiment, when a raw trusted execution environment implemented as a raw image file is created, the data processing platform server 100 may generate a hash value for the raw image file, generate a transaction including the hash value, and deploy it on the blockchain. Accordingly, the data processing platform server 100 may publish to external parties that a raw trusted execution environment has been generated for generating the trusted execution environment.

The data processing platform server 100 may create a trusted execution environment containing a data processing code and a second encryption key corresponding to the data processing request based on the raw trusted execution environment. The trusted execution environment is a secure execution environment provided by an independent secure area, just like the raw execution environment, and may be generated as a first image file for implementing a virtual execution environment.

According to an embodiment, the data processing platform server 100 may determine the authenticity of the raw image file, which serves as the basis for generating the raw trusted execution environment, prior to the creation or execution of the trusted execution environment. The data processing platform server 100 may generate a hash value of the raw image file and compare whether it matches the hash value of the raw image file deployed on the blockchain, and may ensure the authenticity of the raw image file when they match. Then, the data processing platform server 100 may create a trusted execution environment containing a data processing code and a second encryption key corresponding to the data processing request based on the raw trusted execution environment whose authenticity is ensured.

The second encryption key of the trusted execution environment may include an account address of the trusted execution environment, and may use a mechanism based on public-private key pairs to represent the uniqueness of blockchain participants for generating the second encryption key. The second encryption key includes a second public key that is the account address and a second private key that controls the second public key. For example, when the trusted execution environment operates on the Ethereum blockchain, the public key may be an Externally Owned Address (EOA).

The trusted execution environment, when generating an account address, may generate a 256-bit random number, set the random number as a second private key, and derive a unique second public key by applying an elliptic curve cryptography algorithm to the second private key.

For example, the trusted execution environment may generate random 256-bit data, encode the generated 256-bit data into a 64-digit hexadecimal (Hex) string to generate a second private key, and use an elliptic cryptography algorithm based on the second private key to generate a second public key. Then, the trusted execution environment may convert the public key to a Keccak256 hash value to generate 256-bit binary data, remove the front 96-bit data from the binary data, and encode the remaining 160-bit binary data as a Hex string value to generate an account address that is the second public key.

However, the encryption algorithm for generating a public key based on a private key may use not only elliptic cryptography algorithms but also other encryption algorithms such as RSA (Rivest, Shamir and Adleman) encryption algorithms and ElGamal encryption algorithms.

The second public key of the trusted execution environment created through this process is published to external parties through the blockchain, and data encrypted with the second public key is configured to be restored only with the second private key of the trusted execution environment.

According to an embodiment, when a trusted execution environment implemented as a first image file is created, the data processing platform server 100 may generate a hash value for the first image file and generate a transaction including the hash value to record it on the blockchain. Accordingly, the data processing platform server 100 may disclose to the outside that the trusted execution environment corresponding to the smart contract has been safely executed without being tampered with or forged.

The trusted execution environment may request data collection from the data generation device 200 to perform data processing corresponding to the data processing code. For this purpose, the trusted execution environment may generate a first transaction requesting first data from the data generation device 200 and record it on the blockchain. In this case, the trusted execution environment may deploy a separate smart contract for data collection to the blockchain, or may create only a transaction to notify data collection and record it on the blockchain.

According to an embodiment, when a data collection target is designated from the data processing request device 400 at the time of concluding the smart contract, the trusted execution environment may request the data collection target to transmit data. That is, the trusted execution environment may designate an account of a specific data generation device and record a transaction requesting data transmission to the designated data generation device on the blockchain.

According to another embodiment, the trusted execution environment may request data transmission to any data generation device 200 by recording a transaction including data types, contents, etc. required for data processing on the blockchain. In other words, the trusted execution environment may publish data collection conditions without designating a data collection entity, thereby collecting data from all data generation devices 200 that possess data satisfying the data collection conditions.

Meanwhile, the first data, in which a data area corresponding to personal information has been de-identified by the first encryption key, requires identification processing of the data area for data processing. Therefore, the trusted execution environment may create a second transaction requesting the first encryption key from the encryption key supply device 300 and record it on the blockchain to perform data processing corresponding to the data processing code.

The trusted execution environment may perform data processing based on data collected from the data generation device 200. Since inbound and outbound rules are set in the trusted execution environment, the trusted execution environment receives only data in a format corresponding to the data processing code and returns data processing results to the outside in a predetermined format.

The trusted execution environment may perform data processing when the first data collected from the data generation device 200 conforms to the criteria required for data processing. However, since a data area corresponding to personal information among the first data collected from the data generation device 200 has been de-identified with the first encryption key of the encryption key supply device, the trusted execution environment may perform identification processing on that data area with the first encryption key and then perform data processing according to the data processing code

Here, the first encryption key, which is an asymmetric key comprised of a pair of a first private key and a first public key of the encryption key supply device 300, refers to an encryption key generated according to a preset schedule by the encryption key supply device 300.

Meanwhile, since the personal information in the first data could be exposed and individual privacy could be compromised if the first private key among the first encryption keys is leaked externally, the trusted execution environment may acquire the first private key, encrypted with the second public key, from the encryption key supply device 300. Then, the trusted execution environment may decrypt the encrypted first private key using the second private key and decrypt the first data based on the first private key.

The trusted execution environment may perform data processing on the decrypted first data when the decrypted first data complies with the criteria required for data processing.

For example, when the first data is image data recording a specific area and the data processing request device requests the detection of a specific person X within the first data, the trusted execution environment may analyze the decrypted first data to determine the presence of the specific person X. An artificial intelligence object recognition algorithm model is employed in the data processing code used in the trusted execution environment, and the trusted execution environment may utilize the artificial intelligence object recognition algorithm to determine the presence of the specific person X within the first data using and return, as data processing results, the time and location where the specific person X was presented in a specific area, along with image frames containing the specific person X.

If the trusted execution environment receives the first data from each of multiple data generation devices, it may analyze the first data and return, as data processing results, the times when the specific person X was present at different locations and image frames containing the specific person X.

In this regard, the trusted execution environment may use face detection algorithms using feature points (landmarks), deep learning-based YOLO (You Look Only Once) models, MobileNet, R-CNN (Recursive Convolutional Neural Network), Faster-RCNN, SSD (Single Shot multibox Detector), etc. as artificial intelligence object recognition algorithms, but is not limited thereto and known algorithm models for object recognition may also be used.

When data processing is completed, the trusted execution environment may return the data processing result to the data processing request device 400. The trusted execution environment may acquire a third public key provided by the data processing request device 400 at the time of establishment of the smart contract, and may encrypt the data processing results using the third public key of the data processing request device 400 and return them to the blockchain.

The smart contract between the data processing platform server 100 and the data processing request device 400 may be automatically established when a data processing request that complies with preset conditions is input, and the contract may be terminated when a data processing results corresponding to the data processing request is returned. Therefore, when the trusted execution environment encrypts the data processing results, generates a transaction including the encrypted data processing results, and records it in a block of a blockchain, it means that the execution of the smart contract is completed.

Meanwhile, the trusted execution environment has a temporary status that maintains validity only during the period in which the smart contract is in effect. That is, the trusted execution environment is generated only when the smart contract deployed on a blockchain is established and a data processing request is received from the data processing request device 400, and the trusted execution environment is destroyed when data processing confirming to the content of the smart contract is completed or when the smart contract is terminated for other reasons.

Destroying a trusted execution environment refers to the initialization of the environment itself that constitutes the trusted execution environment, meaning that a series of data associated with the trusted execution environment is deleted. Therefore, not only the first data received from the data generation device 200 for data processing by the trusted execution environment but also the data processing code received from the data processing request device 400 are deleted together as the trusted execution environment is destroyed.

If the data processing platform server 100 stores data even after data processing is completed, there is a risk that data may leak due to external malicious attacks and may be viewed by operators of the data processing platform server 100.

However, the data processing platform server 100 according to an embodiment of the present invention stores data received from the data generation device 200 only during the period when the smart contract is maintained, and destroys the trusted execution environment and deletes the stored data when the smart contract is terminated. Accordingly, the data processing platform server 100 may prevent data from being leaked externally and fundamentally block data viewing by the operating entities of the data processing platform server 100, thereby protecting the privacy of the data-providing entities.

According to an embodiment, the trusted execution environment may record a flag indicating that a destroy command has been executed on the blockchain. When the destroy command is executed, a flag that cannot be arbitrarily tampered with is generated. When the destroy command is executed, the trusted execution environment may create a transaction including the flag, record it on the blockchain, and then proceed with the destroy process.

The trusted execution environments created for data processing is a virtual execution environment, with at least one instance created on the data processing platform server 100 to execute smart contracts, and may be independently created and destroyed, and thus initialized depending on whether contracts are established and executed. In this way, the data processing platform server 100 may execute multiple smart contracts simultaneously using trusted execution environments that operate independently for each smart contract.

The data generation device 200, which is a communication device capable of accessing the data processing platform, may store data required for data processing and execute user data management applications necessary for managing the stored data.

In particular, the data generation device 200, such as a home camera, CCTV, and vision camera, may be a device that generate data containing personal information and may record specific areas to generate first data including image frames. At this time, the data generation device 200 may detect objects within the image frames and preemptively perform de-identification processing on personal information before storing, streaming, or transmitting the data.

In other words, the data generation device 200 may record specific areas and preemptively de-identify personal information contained in the image frames, and then perform storage, streaming, or transmission operations on the data. This fundamentally blocks access to personal information at the hardware level, ensuring that the original data stored, streamed, or transmitted by the data generation device 200 is first data with personal information de-identified.

Here, de-identification processing is a processing technology for de-identification, masking, face synthesizing conversion, etc. for personal information such as faces, body parts, license plates, and resident registration numbers in image frames, and de-identification processing standards may be presented through HIPAA Privacy Rules linked to HIPAA (Health Insurance Portability and Accountability Act), but are not limited thereto and may be variously changed by designers of the data generation device 200.

The data generation device 200 uses the first encryption key provided from the encryption key supply device 300 for de-identification processing, and since it receives only the first public key among the first encryption keys, it cannot arbitrarily decrypt the first data to identify personal information. This is designed to inherently block sensitive personal information from leaking to the outside.

When the data processing platform server 100 requests first data for data processing, the data generation device 200 may provide the first data to the data processing platform server 100 through a user data management application.

The data generation device 200 runs an application that scans the blockchain, allowing it to check transactions recorded on the blockchain and confirm data requests from the trusted execution environment. For example, the data generation device 200 may confirm data requests from the trusted execution environment recorded on the blockchain using applications such as Etherscan and Remix.

The data generation device 200 may provide the first data to the trusted execution environment running on the data processing platform server 100. The data generation device 200 may transmit encrypted data to the trusted execution environment through the data processing platform, but to ensure reliability, it may also generate a transaction containing the hash value of the first data and record it on the blockchain.

The data generation device 200 may acquire coins from the blockchain as compensation for providing the first data to the data processing platform server 100, and the quantity of coins that may be acquired may be set by the trusted execution environment.

The owners of the data generation device 200 may have anxiety about personal information exposure because they provide information that can identify individuals, such as faces and body parts included in the first data, to the data processing platform server 100.

To solve this issue, the data generation device 200 may scan the blockchain through an application to check flags of destroy commands recorded on the blockchain. When a flag of a destroy command for the trusted execution environment is scanned by the data generation device 200, it may be guaranteed that the trusted execution environment and data have been safely deleted.

The encryption key supply device 300 may be a device that generates first encryption keys according to a preset schedule and provides them to the data generation device 200, and may be an administrator device of the data generation device 200 or a device that generates only encryption keys separately.

The encryption key supply device 300 may generate different first encryption keys according to a preset schedule and may sequentially supply the generated first public keys to the data generation device 200.

Accordingly, the data generation device 200 may perform de-identification processing for personal information using one first public key per unit time. Since the data generation device 200 stores first public key information used for de-identification processing along with the first data when storing the first data, the trusted execution environment may later perform decryption using a first private key corresponding to the first public key information included in the first data.

The data processing request device 400 is a device that generates data processing requests that comply with smart contracts and provides transactions including data processing requests to the blockchain to conclude smart contracts with the data processing platform server 100. For example, the data processing request device 400 may be at least one of a PC (personal computer), a smart phone, a tablet PC, a mobile internet device (MID), an internet tablet, an IoT (internet of things) device, an IoE (internet of everything) device, a desktop computer, a laptop computer, a workstation computer, a Wibro (Wireless Broadband Internet) device, and a PDA (Personal Digital Assistant).

The data processing request device 400 obtains identified personal information or data processing results generated using personal information, and thus may be a device of an entity that has acquired authority to view personal information from the data generation device 200 or has been delegated authority to view personal information by government agencies.

The data processing request device 400 may provide data processing code required for data processing along with data processing requests as a transaction at the time of establishment of smart contracts, and may also provide accounts of specific data generation devices 200 as transactions to designate data collection entities.

To receive encrypted data processing results, the data processing request device 400 may also provide its public key along with the data processing request as a transaction during the establishment of smart contracts.

The data processing request device 400 may acquire data processing results from the blockchain as smart contracts are executed. If data processing results are encrypted, the data processing request device 400 may obtain data processing results that comply with the data processing request by decrypting them using its private key.

In this way, the data processing request device 400 may obtain desired results without directly collecting or processing data required for data processing. In addition, since personal information other than data required for data processing or information requiring security is not exposed to the entity of the data processing request device 400, ensuring that the privacy of the data-providing entity may be safely protected.

FIGS. 2A to 2C are diagrams for explaining a method for de-identification processing of personal information using a smart contract-based trusted execution environment according to an embodiment of the present invention.

Referring to FIG. 2A, the encryption key supply device 300 may generate a first encryption key and provide it to the data generation device 200.

The first encryption key KEY1 generated by the encryption key supply device 300 is an asymmetric key comprised of a pair of a first private key and a first public key, and the data generation device 200 is provided with only the first public key. This is to prevent the first data DAT1 de-identified by the data generation device 200 from being arbitrarily decrypted and to prevent the first private key from leaking to the outside due to malicious attacks such as hacking.

The encryption key supply device 300 may generate different first encryption keys KEY1 according to a preset schedule and may sequentially supply first public keys to the data generation device 200. When there are multiple data generation devices 200 that receive the first encryption key KEY1 from the encryption key supply device 300, the encryption key supply device 300 may provide the same first encryption key KEY1 to the data generation devices 200 or may provide different first encryption keys KEY1 to each data generation device 200 according to user design.

The encryption key supply device 300 may provide the first encryption key KEY1 to the data generation device 200 through the blockchain BC.

However, the first encryption key KEY1 provided to the data generation device 200 includes only the first public key, wherein the first public key does not cause personal information damage even if leaked to any third party. Therefore, the encryption key supply device 300 may directly provide the first public key to the data generation device 200 through a network communication network or may provide it through a data processing platform.

The data generation device 200 may preemptively de-identify personal information contained in specific areas within image frames IM when recording, and then perform storage, streaming, or transmission operations on the data.

The data generation device 200 may identify objects containing personal information within image frames IM and perform de-identification processing on the objects using the first public key. De-identification processing is a processing technology for de-identification, masking, face synthesizing conversion, etc. for personal information such as faces, body parts, license plates, and resident registration numbers in image frames, and de-identification processing standards may be presented through HIPAA Privacy Rules linked to HIPAA (Health Insurance Portability and Accountability Act), but are not limited thereto and may be variously changed by designers of the data generation device 200.

The data generation device 200 may perform de-identification processing on personal information using one first public key per unit time, but is not limited thereto and may also perform de-identification processing on all personal information based on one first public key. The first data DAT1 generated by the data generation device 200 has data areas corresponding to personal information de-identified based on the first public key, and when not related to personal information, no separate de-identification processing is performed.

According to an embodiment, the data generation device 200 may recognize objects within image frames and then selectively identify only personal information related to predesignated targets among the recognized objects to perform de-identification processing. Therefore, in the first data DAT1, only data areas corresponding to personal information of predesignated targets are de-identified, while the rest is not subjected to de-identification processing.

According to an embodiment, when the data size of image frames exceeds a reference size, the data generation device 200 may perform primary de-identification processing on data areas corresponding to personal information requiring de-identification using a third encryption key generated by a symmetric key algorithm, such as Advanced Encryption Standard (AES), and may encrypt the third encryption key based on the first encryption key KEY1. In this case, the third encryption key may be stored together with first public key information in the first data DAT1.

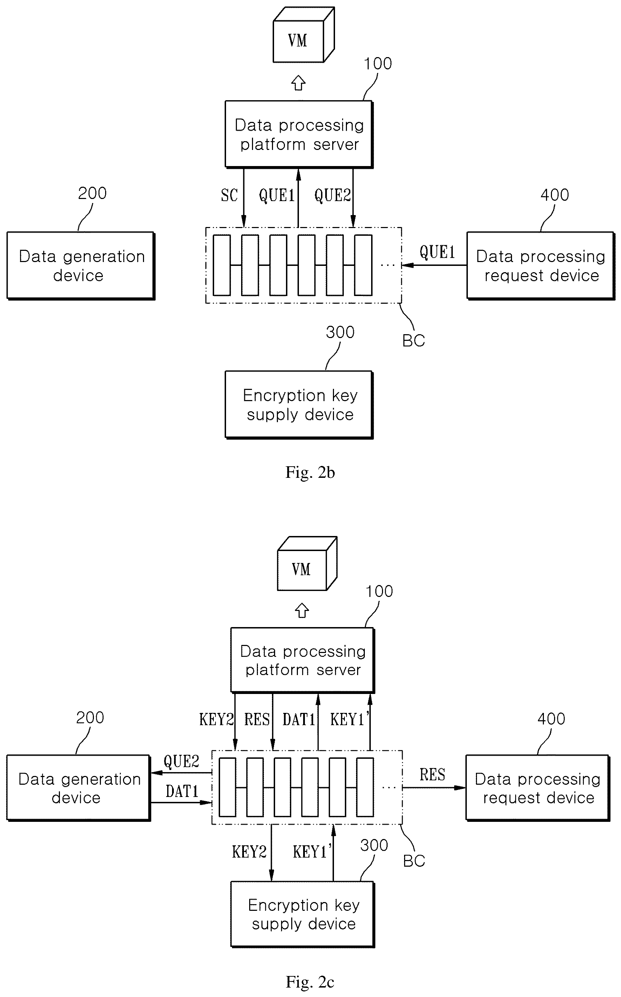

Referring to FIG. 2B, the data processing platform server 100 may create a smart contract SC for data processing and deploy it on the blockchain BC, and the smart contract SC may be recorded in blocks of the blockchain BC, enabling the smart contract SC to be executed on the blockchain BC.

The smart contract SC is automatically established when a transaction including a data processing request QUE1 that complies with preset regulations is provided to the blockchain BC by the data processing request device 400, and it terminates when a data processing result corresponding to the data processing request QUE1 is returned.

The data processing request device 400 may provide a data processing request QUE1 that complies with the smart contract SC to the blockchain BC to acquire data processing results.

When the smart contract SC is established between the data processing platform server 100 and the data processing request device 400, the data processing platform server 100 creates a trusted execution environment VM that includes a data processing code and a second encryption key in response to the data processing request QUE1. Here, the data processing code may mean the data processing model provided by the data processing request device 400 to the blockchain.

The trusted execution environment VM may generate a transaction including a data request QUE2 to the data generation device 200 and record it on the blockchain BC in order to perform data processing corresponding to the data processing code.

Referring to FIG. 2C, the data generation device 200 may acquire the data request QUE2 of the trusted execution environment VM from the blockchain BC and record the stored first data DAT1 on the blockchain or create a transaction including a hash value of the first data DAT1 and record it on the blockchain BC to provide data encrypted with hash values to the trusted execution environment VM.

Encryption key supply device 300 may acquire the second encryption key KEY2 recorded together with the data request QUE2 of the trusted execution environment VM from the blockchain BC. The second encryption key KEY2 acquired by the encryption key supply device 300 means the second public key of the trusted execution environment VM.

Meanwhile, since the first private key among the first encryption keys KEY1 is required for decrypting the first data DAT1, the encryption key supply device 300 needs to encrypt the first private key and safely provide it to the trusted execution environment VM.

Therefore, the encryption key supply device 300 may encrypt the first encryption key based on the second encryption key KEY2 and provide the encrypted first encryption key KEY1 to the trusted execution environment. That is, the encryption key supply device 300 may encrypt the first private key based on the second public key of the trusted execution environment VM and create a transaction for the second private key encrypted with hash values and record it on the blockchain BC.

The trusted execution environment VM may perform data processing when data collected from the data generation device 200 complies with the criteria required for data processing.

Since the first data DAT1 obtained from the blockchain BC has been de-identified with the first public key among the first encryption keys KEY1, the trusted execution environment VM must first acquire the first private key. The trusted execution environment VM may acquire the first private key by decrypting the first private key, which is encrypted with the second public key, using the second private key.

The trusted execution environment VM may decrypt the first data based on the first private key to perform identification processing on data areas corresponding to personal information. Meanwhile, since first public key information is stored together in the first data, the trusted execution environment VM may perform decryption using a first private key corresponding to the first public key information included in the first data.

Then, the trusted execution environment VM may perform data processing according to the data processing code. When data processing is completed, the trusted execution environment VM may provide the data processing result RES to the data processing request device 400.

The trusted execution environment VM may record the data processing result RES on the blockchain without separate encryption, but may also encrypt the data processing result using the third public key of the data processing request device 400 and return it to the blockchain BC to prevent the data processing result RES from being exposed to the outside.

The smart contract SC is terminated when the data processing result RES that complies with the data processing request QUE1 is returned. The trusted execution environment VM may confirm that the execution of the smart contract SC is completed by checking whether the data processing result RES is recorded on the blockchain BC.

When the data processing result RES is returned and the smart contract SC is terminated, the trusted execution environment VM running on the data processing platform server 100 proceeds to destroy mode. As the trusted execution environment VM is destroyed, data received from the data generation device 200 for data processing is also deleted from the data processing platform server 100.

The data processing request device 400 may obtain the encrypted data processing result RES recorded on the blockchain BC and obtain a data processing result that complies with the data processing request by decrypting the encrypted data processing result RES with the third private key.

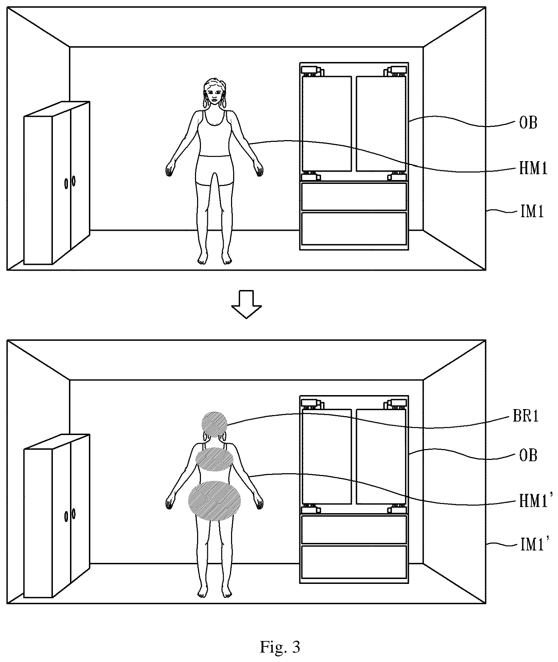

FIG. 3 is a diagram for explaining a method for de-identification processing of personal information in a data generation device according to another embodiment of the present invention.

Referring to FIG. 3, the data generation device 200 is a device, such as a home camera, CCTV, and camera, which generates data containing personal information, and it may generate first data including image frames in which specific areas are recorded.

The data generation device 200 may preemptively de-identify personal information included in specific areas within image frames IM when recording, and then perform storage, streaming, or transmission operations on the data to fundamentally block access to personal information at the hardware level.

De-identification processing may be performed on areas set by users, such as information related to persons, text, and object entities included in image frames.

According to an embodiment, de-identification processing may be performed only on preregistered targets based on to user's settings, while it may not be performed on unregistered targets.

For example, if the data generation device 200 is a home camera installed in a home, the user may configure de-identification processing only for residents of the home, and in this case, outsiders who do not reside in the home may remain identifiable in image frames.

In addition, de-identification processing may be performed limited to some areas of objects, and de-identification processing methods may be variously changed according to user settings such as masking and face synthesizing conversion.

Specifically, the data generation device 200 may be a home CCTV that records the interior of a home in real time, and a first image frame IM1 may be generated by the data generation device 200. The data generation device 200 may recognize objects included in the first image frame IM1 through, for example, an artificial intelligence object recognition algorithm and may distinguish the first user HM1 and the object OB.

If the first user HM1 is designated as a target for de-identification processing, the data generation device 200 may de-identify the data areas corresponding to the first user HM1 based on the first encryption key KEY1. In this case, the data generation device 200 may perform de-identification processing methods differently according to administrator settings such as mosaicking part of the first user HM1's body, face synthesizing conversion, and inserting characters into the body.

In the de-identified first image frame IM1', all or part of the first user HM1's body is subject to de-identification processing BR, while other objects OB remain in an identifiable state. Then, the data generation device 200 may store, stream, or transmit the first data including the de-identified first image frame IM1' only after generating the de-identified first image frame IM1'.

Accordingly, even if any third party obtains the first data, since personal information has been de-identified, the personal information becomes anonymized and individuals can no longer be identified.

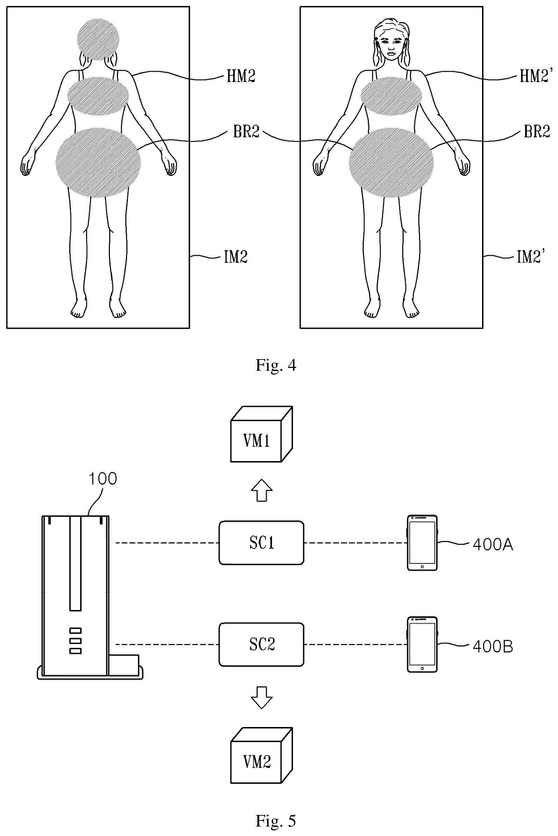

FIG. 4 is a diagram for explaining a method for identification processing of personal information in a trusted execution environment according to an embodiment of the present invention.

Referring to FIG. 4, the trusted execution environment VM may perform identification processing on some data areas corresponding to personal information among first data collected from the data generation device 200 for data processing according to the data processing code.

Since the first data is de-identified by the first public key among the first encryption keys, the trusted execution environment VM may perform identification processing on personal information using the first private key among the first encryption keys obtained from the encryption key supply device 300.

Meanwhile, since first public key information used for de-identification processing is stored together in the first data, the trusted execution environment VM may perform decryption on personal information using a first private key corresponding to the first public key information included in the first data.

For example, the first data may include a second image frame IM2, and a de-identified second user HM2 may be included in the second image frame IM2. The trusted execution environment VM may perform identification processing on the de-identified second user HM2 to perform data processing. In this case, the trusted execution environment VM may selectively perform identification processing on all or part of the de-identified second user HM2, which may vary depending on the data processing code.

The trusted execution environment VM may perform data processing using the decrypted first data, that is, the first data including the second image frame IM2' that is subject to identification processing. Since the trusted execution environment is destroyed when data processing results are returned according to smart contracts, a series of personal information related to the trusted execution environment is also deleted together to protect individual privacy.

Consequently, according to the method for identification processing of personal information in the trusted execution environment VM according to an embodiment of the present invention, even when personal information is de-identified, the personal information may be restored and used so that it can be identified in limited situations, and after deriving data processing results, it is safely deleted to protect individual privacy.

FIG. 5 is a diagram for explaining a smart contract according to an embodiment of the present invention.

Referring to FIG. 5, the data processing platform server 100 may create smart contracts for data processing and deploy them to the blockchain, and may create trusted execution environments for data processing when smart contracts are established with the data processing request device 400.

The data processing platform server 100 may create and deploy multiple smart contracts to the blockchain, and if multiple different data processing requests are made to one smart contract, multiple different trusted execution environments may be created.

The trusted execution environments created for data processing are virtual execution environments, with at least one instance created on the data processing platform server 100 to execute smart contracts. That is, even if 10 smart contracts are deployed on the blockchain, if only 2 smart contracts are established, the data processing platform server 100 may run 2 trusted execution environments to execute the contracts.

In addition, since whether execution is completed normally, execution period, execution method, etc. may all be set differently for each smart contract, a series of processes in which each smart contract is created and destroyed depending on whether contracts are established and executed are performed independently.

For example, the data processing platform server 100 may establish a first smart contract SC1 with a first data processing request device 400A and a second smart contract SC2 with a second data processing request device 400B. The data processing platform server 100 may create a first trusted execution environment VM1 corresponding to the establishment of the first smart contract SC1 and a second trusted execution environment VM2 corresponding to the establishment of the second smart contract SC2. Even if there are smart contracts deployed on the blockchain BC other than the first and second smart contracts SC1 and SC2, the data processing platform server 100 runs trusted execution environments only for established smart contracts.

The first trusted execution environment VM1 and the second trusted execution environment VM2 are virtual machines created based on different contract contents and run independently of each other, making it impossible for one trusted execution environment to affect another. Therefore, even if the first trusted execution environment VM1 is destroyed upon completion of contract execution, the second trusted execution environment VM2 is not affected and may continue to perform data processing processes according to the content of the second smart contract SC2.

In this way, the data processing platform server 100 may execute multiple smart contracts simultaneously using trusted execution environments that operate independently for each smart contract and may prevent risks of data leakage or mixing by using independent data processing spaces that cannot be infringed.

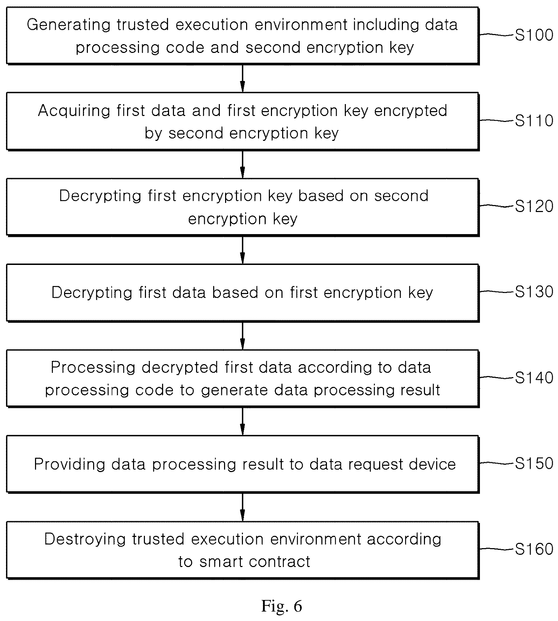

FIG. 6 is a flowchart for explaining a method for de-identification processing of personal information using a smart contract-based trusted execution environment according to an embodiment of the present invention.

Referring to FIG. 6, a trusted execution environment running on the data processing platform server 100 may be created in response to a data processing request received from a data processing request device 400 according to a smart contract deployed on the blockchain BC, and may include a data processing code and a second encryption key (S100).

Then, the trusted execution environment may acquire first data and a first encryption key encrypted by the second encryption key respectively from the data generation device 200 and the encryption key supply device 300 (S110).

Then, the trusted execution environment may decrypt the encrypted first encryption key based on the second encryption key (S120), and then decrypt the first data based on the first encryption key (S130).

Then, the trusted execution environment may process the decrypted first data according to the data processing code to generate a data processing result (S140).

Then, the trusted execution environment may provide the encrypted data processing result to the data processing request device 400 by encrypting the data processing result using a third public key of the data processing request device 400 and returning it to the blockchain (S150). Therefore, the smart contract established between the data processing platform server 100 and the data processing request device 400 may be terminated simultaneously with the return of the data processing result.

Then, the trusted execution environment may be destroyed by executing a destroy command as the execution of the smart contract is completed (S160). As the trusted execution environment is destroyed, the environment constituting the trusted execution environment is initialized, and a series of data including the first data and data processing code received from the data generation device 200 is deleted.

The steps of the user data management method or algorithm using data processing of the smart contract-based trusted execution environment described in relation to embodiments of the present invention may be implemented directly in hardware, implemented as software modules executed by hardware, or implemented by a combination thereof. Software modules may reside in Random Access Memory (RAM), Read Only Memory (ROM), Erasable Programmable ROM (EPROM), Electrically Erasable Programmable ROM (EEPROM), Flash Memory, hard disks, removable disks, CD-ROMs, or any other form of computer-readable storage medium well known in the art to which the present invention belongs.

Although embodiments of the present invention have been described above, it will be understood that those skilled in the art to which the present invention belongs may make various modifications without departing from the scope of the claims of the present invention.

### INDUSTRIAL APPLICABILITY

According to the present invention, even when personal information is de-identified, the personal information may be restored and used so that it can be identified in limited situations, and after deriving data processing results, it is safely deleted to protect individual privacy.

In addition, according to the present invention, access to personal information may be fundamentally blocked at the hardware level by preemptively de-identifying identified personal information before a series of data processing processes such as data storage, streaming, and transmission.

Moreover, according to the present invention, when smart contracts are terminated, trusted execution environments are destroyed and stored data is also deleted, thereby preventing collected data from leaking to the outside and fundamentally blocking data viewing by operating entities of data processing platform servers to protect the privacy of data entities.

Furthermore, according to the present invention, personal information generated by data generation devices such as cameras, CCTVs, and home cameras is fundamentally encrypted and not disclosed even to data entities, and is used restrictively only under specific analysis conditions, thereby protecting individual privacy.

Additionally, according to the present invention, multiple smart contracts may be executed simultaneously using trusted execution environments that operate independently for each smart contract.

Also, according to the present invention, by recording flags of destroy commands on the blockchain, it may be ensured that trusted execution environments provided with data are stably removed and that data is safely deleted without leaking to the outside.

Moreover, according to the present invention, data processing request devices may obtain desired data processing results without directly collecting or processing data required for data processing, and because data required for data processing is not exposed to data processing request devices, the privacy of data-providing entities may be safely protected.

## Claims

1. A method for processing personal information using a smart contract-based trusted execution environment, which comprises:
generating, by a data processing platform server, a trusted execution environment containing a data processing code and a second encryption key in response to a data processing request received from a data processing request device according to a smart contract deployed on a blockchain;
acquiring, by the trusted execution environment, first data and a first encryption key respectively from a data generation device and an encryption key supply device;
decrypting, by the trusted execution environment, the first data based on the first encryption key;
processing, by the trusted execution environment, the decrypted first data according to the data processing code to generate a data processing result;
providing, by the trusted execution environment, the data processing result to the data processing request device; and
destroying the trusted execution environment according to the smart contract.

2. The method of claim 1, further comprising:
after said generating the trusted execution environment, generating, by the trusted execution environment, a first transaction requesting the first data and a second transaction requesting the first encryption key to record them on the blockchain.

3. The method of claim 1, wherein:
the first encryption key is an asymmetric key comprised of a pair of a first private key and a first public key generated by the encryption key supply device, and
the first public key is generated based on the first private key, wherein the first encryption key is updated by the encryption key supply device according to a preset schedule.

4. The method of claim 3, wherein the first data is data generated by the data generation device, wherein a data area corresponding to personal information is subject to a de-identification processing based on the first public key, and includes first public key information regarding the first public key used for the de-identification processing.

5. The method of claim 4, wherein the decrypted first data has the data area corresponding to the personal information that is identified based on the first private key.

6. The method of claim 1, wherein the second encryption key is an asymmetric key comprised of a pair of a second private key and a second public key of the trusted execution environment, and
the second public key is generated based on the second private key and is an account address of the trusted execution environment on the blockchain.

7. The method of claim 1, wherein the trusted execution environment is a virtual execution environment that maintains validity only during the period in which the smart contract is in effect.

8. The method of claim 1, wherein said destroying the trusted execution environment according to the smart contract includes:
executing a destroy command; and
deleting the trusted execution environment including the data processing code, the first data, and the decrypted first data.

9. The method of claim 8, wherein said executing a destroy command includes:
executing the destroy command, generating a flag indicating the execution of the destroy command, and then generating a transaction including the flag to record it on the blockchain.

10. The method of claim 1, wherein said descrypting the first data includes:
if the trusted execution environment acquires the first data from multiple data generation devices, identifying data areas corresponding to personal information based on first private keys corresponding to first public key information included in each first data.

11. The method of claim 1, wherein said generating a trusted execution environment includes:
generating a raw trusted execution environment in which arbitrary data processing code and second encryption key are not generated; and
generating, based on the raw trusted execution environment, the trusted execution environment containing the data processing code and the second encryption key corresponding to the data processing request.

12. The method of claim 11, wherein said generating a raw trusted execution environment includes:
generating a first hash value of a raw image file serving as the basis for generating the raw trusted execution environment, comparing the first hash value with a second hash value of a raw image file pre-deployed on the blockchain, and ensuring the authenticity of the raw trusted execution environment when the first hash value matches the second hash value.

13. The method of claim 11, wherein said generating a trusted execution environment containing a data processing code and a second encryption key corresponding to the data processing request includes:
generating a first image file of the trusted execution environment, generating a hash value for the first image file, and generating a transaction including the hash value to record it on the blockchain.

14. A computer-readable storage medium storing one or more programs, wherein the one or more programs are configured to be executed by one or more processors of an electronic device, and the one or more programs include instructions for performing the method of any one of claims 1 to 13.

15. A system for processing personal information using a smart contract-based trusted execution environment comprising:
a data generation device configured to generate first data including a data area in which personal information is de-identified based on a first encryption key; and
a data processing platform server configured to create a trusted execution environment containing a data processing code and a second encryption key in response to a data processing request received from a data processing request device according to a smart contract deployed on a blockchain, and acquire from the blockchain a first encryption key encrypted with the second encryption key and the first data,
wherein the trusted execution environment is configured to decrypt the encrypted first encryption key based on the second encryption key; decrypt the first data based on the decrypted first encryption key; and process the decrypted first data according to the data processing code to generate a data processing result, and wherein the trusted execution environment returns the data processing result to the data processing request device according to the smart contract.

16. The system of claim 15, wherein the data generation device is an image recording device that records images configured to:
detect persons within recorded image frames; perform de-identification processing on at least a part of persons requiring de-identification; and generate the first data including image frames on which the de-identification processing has been performed.

17. The system of claim 16, wherein the data generation device is configured to:
perform primary de-identification processing on persons requiring de-identification using a third encryption key generated according to a symmetric encryption algorithm; and encrypt the third encryption key based on the first encryption key.

18. The system of claim 15, wherein the trusted execution environment is a virtual execution environment that maintains validity only during the period in which the smart contract is in effect, and wherein the trusted execution environment is destroyed according to the smart contract after providing the data processing result to the data processing request device and, upon destroyed, the trusted execution environment including the data processing code, the first data, and the decrypted first data is deleted.

19. The system of claim 15, wherein the decrypted first data includes data in which the data area corresponding to the personal information is identified based on the decrypted first encryption key, and
the trusted execution environment is configured to process the identified personal information according to the data processing code to generate a data processing result.

20. The system of claim 15, further comprising:
an encryption key supply device configured to generate different first encryption keys according to a preset schedule and provide them to the data generation device.
